# EUROPÄISCHE PATENTSCHRIFT

(11) **EP 2 326 848 B1**
(45) Veröffentlichungstag und Bekanntmachung des Hinweises auf die Patenterteilung: **17.04.2013**
(21) Anmeldenummer: 09778234.6
(22) Anmeldetag: 01.09.2009
(51) Int. Cl.: F16B 25/00, F16B 33/02

(54) **SCHRAUBE**
SCREW
VIS

(30) Priorität: 24.09.2008 DE 102008048703
(43) Veröffentlichungstag der Anmeldung: 01.06.2011
(73) Patentinhaber: fischerwerke GmbH & Co. KG, 72178 Waldachtal (DE)
(72) Erfinder: BRAUN, Werner, 71540 Murrhardt (DE); MOHR, Fabian, 72160 Horb a. N. (DE)
(86) Internationale Anmeldenummer: PCT/EP2009/006308
(87) Internationale Veröffentlichungsnummer: WO 2010/034390

(56) Entgegenhaltungen:
- EP-A2- 1 925 828
- DE-A1- 4 228 727
- US-A- 5 015 134
- US-A- 5 273 383
- US-A1- 2005 069 396

## Beschreibung

Die Erfindung betrifft eine Schraube mit den Merkmalen des Oberbegriffs des Anspruchs 1 (US 2005/0069396 A1).

Bei einer derartigen Schraube handelt es sich beispielsweise um eine Holz- oder Spanplattenschraube, wie sie aus der Druckschrift US 4 874 278 bekannt ist. Die aus der Figur 1 der Druckschrift bekannte Schraube mit einem Schaft, einer Spitze, einem Kopf mit einem Drehmitnahmemittel sowie mit einem Hauptgewinde und einem Nebengewinde weist ein Hauptgewinde auf, dessen Gewindesteigung kleiner ist als die Gewindesteigung des Nebengewindes. Im Weiteren soll mit "vorne" das spitzenseitige Ende und mit "hinten" das kopfseitige Ende gemeint sein. Das Hauptgewinde erstreckt sich über eine erste Teillänge des Schafts und das Nebengewinde über eine zweite Teillänge des Schafts. Bei dieser Schraube ist das Nebengewinde an den an die kegelförmige Spitze angrenzenden Teil des Schafts angeordnet. An der kegelförmigen Spitze ist ein zweiter Teil des Hauptgewindes angeordnet, so dass das Nebengewinde das Hauptgewinde unterbricht. Das Nebengewinde dient zur Abfuhr von Bohrmehl. Dadurch soll verhindert werden, dass es zu lokalen Anhäufungen von Bohrmehl kommt, was das Eindrehen der Schraube behindert, Reibung erzeugt, das Eindrehmoment der Schraube vergrößert und Druckspannungen verursacht, die zu einem Spalten des Werkstücks führen können. Das Nebengewinde ist nicht als umlaufendes Gewinde ausgebildet, sondern weist mehrere rippenförmige Gewindeflanken auf.

Eine weitere derartige Schraube zeigt die Druckschrift EP 0 939 235. Als Nebengewinde sind mehrere rippenförmige Schneiden vorhanden, die sich über einen Teil der Spitze bis zu einem rippenfreien Abschnitt erstrecken. Die Schneiden haben die Funktion, die Fasern des Holzes einzuschneiden, den Eindringwiderstand der Schraube und damit das Eindrehmoment zu reduzieren und einem Spalten des Holzes vorzubeugen. Das Hauptgewinde im rippenfreien Endabschnitt der Spitze der Schraube sorgt für ein gutes erstes Einziehen der Schraube, ohne Behinderung durch die Schneidrippen.

Bei den bekannten Schrauben handelt es sich um leistungsfähige Holz- oder Spanplattenschrauben, die auf Grund der speziellen Ausgestaltung des Nebengewindes und dessen Funktion, ein Spalten des Werkstücks zu verhindern, auch im randnahen Bereich eines Werkstücks verwendet werden können. Die bekannten Schrauben stellen allerdings eine Kompromisslösung dar, zum einen sollen sie schnell und kraftvoll in das Werkstück eindringen, zum anderen soll das Eindrehmoment der Schraube und die Gefahr des Spaltens des Werkstoffs reduziert werden. Dies führt zu Schrauben, die weder dem einen noch dem anderen Aspekt vollständig genügen.

Aufgabe der Erfindung ist es daher, die bekannten Schrauben hinsichtlich ihrer Anwenderfreundlichkeit und ihres Montageverhaltens weiter zu verbessern, ohne die Gefahr des Spaltens des Werkstoffs beziehungsweise das Eindrehmoment der Schraube zu vergrößern.

Diese Aufgabe wird erfindungsgemäß durch eine Schraube mit den Merkmalen des Anspruchs 1 gelöst. Die erfindungsgemäße Schraube, die generell in verformbaren Werkstoffen wie beispielsweise Holz, Holzfaserpressplatten, holzähnlichen Werkstoffen oder Kunststoff eingesetzt werden kann, mit einem Schaft, einer Spitze, einem Kopf mit einem Drehmitnahmemittel sowie mit einem Hauptgewinde und einem Nebengewinde, weist ein Hauptgewinde mit einer kleineren Gewindesteigung als das Nebengewinde auf. Das Hauptgewinde erstreckt sich mindestens über eine erste Teillänge des Schafts und das Nebengewinde erstreckt sich mindestens über eine zweite Teillänge des Schafts. Kennzeichnend für die erfindungsgemäße Schraube ist, dass sich das Hauptgewinde und das Nebengewinde bis zum vorderen Ende der Spitze der Schraube erstrecken und dass das Hauptgewinde über einen wesentlichen Teil seiner Länge, insbesondere im Bereich des Schafts, Gewindeflanken aufweist, die im Wesentlichen höher sind als die Gewindeflanken des Nebengewindes. Das Hauptgewinde ist als ein umlaufendes Schraubengewinde ausgebildet. Mit dem "vorderen Ende" der Spitze der Schraube ist das in Eindringrichtung in ein Werkstück zeigende vordere Ende der Schraube gemeint, also die Seite, die dem Kopf der Schraube gegenüberliegt. Unter der "Höhe der Gewindeflanken" ist die Höhe der Gewindeflanken des Haupt- und des Nebengewindes in ein und demselben Querschnitt der Schraube zu verstehen, wobei die Längsachse der Schraube zur jeweiligen Querschnittsfläche senkrecht steht. Der Kopf der Schraube kann beispielsweise als Senk-, Sechskant- oder Linsenkopf ausgeführt sein, beispielsweise mit einer Schlitz-, Kreuzschlitz- oder Torx-Aufnahme als Drehmitnahmemittel. Wird die erfindungsgemäße Schraube an einem Werkstück zum Einschrauben angesetzt, so führt die erfindungsgemäße Anordnung von Haupt- und Nebengewinde, die beide bis zum vorderen Ende der Spitze der Schraube reichen, dazu, dass das Hauptgewinde der Schraube schon bei der geringsten Drehbewegung greift und die Schraube in das Werkstück einzieht. Dabei ist die Anpresskraft, mit der die Schraubenspitze gegen das Werkstück gepresst werden muss, sehr gering. Dies ist darauf zurückzuführen, dass sich sowohl das Haupt- als auch das Nebengewinde bis zum vorderen Ende der Spitze der Schraube erstrecken und ein Eindrücken einer gewindefreien Spitze in den Werkstoff nicht notwendig ist, damit die Gewindeflanken mit dem Werkstück in Berührung kommen. Da das Hauptgewinde Gewindeflanken aufweist, die im Wesentlichen höher sind als die Gewindeflanken des Nebengewindes, stört das Nebengewinde das Eindrehen der Schraube in den Werkstoff nicht. Im Gegenteil führt die Ausgestaltung des Nebengewindes als umlaufendes Schraubengewinde mit seiner gegenüber dem Hauptgewinde größeren Gewindesteigung dazu, dass das Hauptgewinde durch das Nebengewinde in Richtung des Werkstücks gedrückt wird, was ein schnelles Eindringen der Schraube in das Holz begünstigt. Zudem wird durch das Nebengewinde entstehendes Bohrmehl abtransportiert, was die Spaltneigung des Holzes deutlich verringert. Gegenüber den aus dem Stand der Technik bekannten Schrauben, die bezogen auf das Hauptgewinde relativ hohe Nebengewinde aufweisen, die zwar die Fasern des Holzes schneiden, aber das Hauptgewinde aufgrund ihrer Größe in seiner Funktion stören, ist die erfindungsgemäße Schraube hinsichtlich ihrer Anwenderfreundlichkeit und ihres Montageverhaltens, insbesondere beim Ansetzen an das Werkstück und beim Eindrehen der Schraube während der ersten Umdrehungen, deutlich verbessert.

Vorzugsweise weisen Haupt- und Nebengewinde die gleiche Orientierung auf, sind also beispielsweise beide Rechtsgewinde.

Um das Montageverhalten direkt nach dem Ansetzen der Schraube an das Werkstück noch weiter zu verbessern, beginnt bei der erfindungsgemäßen Schraube das Hauptgewinde und das Nebengewinde am vorderen Ende der Spitze der Schraube in einem gemeinsamen Gewindeanfang. Die Schraube weist somit einen definierten Ansetzpunkt an ihrem vorderen Ende auf, in dem beide Gewinde beginnen. Somit schneiden beide Gewinde gemeinsam, gleichmäßig und zum selben Zeitpunkt in den Werkstoff ein. Ein Abrutschen der Schraube, bedingt durch ein zeitversetztes Ansetzen der beiden Gewindegänge, ist somit ausgeschlossen. Das Nebengewinde unterstützt dabei das Eindringen des Hauptgewindes, in dem es Bohrmehl abtransportiert und, aufgrund der größeren Gewindesteigung des Nebengewindes, indem es das Hauptgewinde in den Werkstoff hinein drückt.

Eine vorteilhafte Ausgestaltungsform der erfindungsgemäßen Schraube weist ein Nebengewinde mit einer Steigung auf, die 2 bis 4, insbesondere 3 mal so groß ist, wie die des Hauptgewindes. Bei einer weiteren vorteilhaften Ausgestaltungsform der erfindungsgemäßen Schraube sind die Gewindeflanken des Hauptgewindes im Wesentlichen 1,5 bis 4,0 mal, insbesondere 1,8 bis 3,5 mal so hoch wie die des Nebengewindes. Diese Ausgestaltungsformen haben sich als besonders anwender- und montagefreundlich erwiesen. Bei den genannten Zahlenwerten handelt es sich, bedingt durch das Herstellungsverfahren, um ungefähre Angaben mit einem Toleranzbereich von ± 20%.

Bei einer weiteren vorteilhaften Ausgestaltungsform der erfindungsgemäßen Schraube ist das Nebengewinde in einem Bereich des Schafts unterbrochen. Das Nebengewinde kann somit beispielsweise ein erstes Teilgewinde im Bereich der Spitze der Schraube und dem in Eintreibrichtung vorderen Teil des Schafts aufweisen, und ein zweites Teilgewinde im hinteren Bereich des Schafts. Durch die Unterbrechung des Nebengewindes wird verhindert, dass die durch die Schraube entstehende Bohrung das Holz nicht zu stark ausfräst, wodurch die Haltekraft der Schraube im Holz beeinträchtigt werden würde. Durch den ersten Teil des Nebengewindes wird das Bohrmehl von der Spitze der Schraube weg transportiert, so dass ein leichtes Eindringen der Schraube in den Werkstoff möglich ist und ein Spalten des Holzes verhindert wird. Der zweite Teil des Nebengewindes bewirkt, dass das Bohrmehl, das von dem Hauptgewinde transportiert wird, sich nicht im hinteren Teil des Hauptgewindes anlagert und lokal verpresst wird, was die Reibung zwischen Gewindeflanken und Werkstoff und somit das Eindrehmoment vergrößern würde und ein Spalten des Werkstoffs bewirken könnte.

Eine weitere bevorzugte Ausführungsform der erfindungsgemäßen Schraube sieht vor, dass ein erster Abschnitt des Nebengewindes von einem zweiten Abschnitt des Nebengewindes einen Abstand von mindestens 2, insbesondere von im Wesentlichen 4 Gewindesteigungen des Hauptgewindes aufweist. Die Gewindesteigung beschreibt den axialen Weg, den ein Gewinde der Schraube bei einer Umdrehung ein- oder ausgedreht wird. Besonders vorteilhaft ist eine Ausführungsform der erfindungsgemäßen Schraube, bei der sich der erste Abschnitt des Nebengewindes von der Spitze über 2 bis 6, insbesondere über 4 Gewindesteigungen des Hauptgewindes erstreckt. Auch diese Zahlenangaben können produktionsbedingt um ± 20% schwanken. Insbesondere diese Ausführungsform, mit einem von der Spitze über 4 Gewindesteigungen des Hauptgewindes geführten Nebengewinden und einer sich daran anschließenden, sich ebenfalls über 4 Gewindesteigungen des Hauptgewindes erstreckenden Unterbrechung des Nebengewindes, erbringt hinsichtlich der Montagefreundlichkeit und der Haltewerte hervorragende Ergebnisse.

Eine weitere bevorzugte Ausgestaltungsform der erfindungsgemäßen Schraube weist an ihrem Hauptgewinde Schneidkerben auf, die Material im Gewindegang abtragen, den Gewindegang weiten, gegebenenfalls Fasern schneiden und dadurch den Widerstand für das in Eindrehrichtung folgende Gewinde verringern. Die Schneidkerben können parallel zur Längsachse der Schraube hintereinander angeordnet sein. Alternativ sind aufeinander folgende Schneidkerben in Umfangsrichtung versetzt angeordnet. Die Schneidkerben reduzieren den Eindrehwiderstand in das Holz und ermöglichen ein leichtes Eindrehen der Schraube.

Um den Eindrehwiderstand der Schraube noch weiter zu reduzieren, sind am Schaft einer weiteren bevorzugten Ausgestaltungsform der erfinderischen Schraube Schaftfräsrippen angeordnet. Diese Schaftfräsrippen, die sich in Eintreibrichtung hinter dem Hauptgewinde befinden, weiten das durch die Schraube erzeugte Bohrloch auf. Die Reibung zwischen einem gewindefreien Teil des Schafts, der sich zwischen den Schaftfräsrippen und den Kopf der Schraube befindet, und dem Holz wird hierdurch verringert. Zudem werden Spannungen im Werkstück, die durch den im gewindefreien Teil des Schafts vergrößerten Kern der Schraube entstehen können, reduziert. Vorteilhafterweise ist eine weitere Ausführungsform der erfindungsgemäßen Schraube zumindest teilweise mit Gleitwachs beschichtet. Das Gleitwachs verringert den Eindrehwiderstand in den Werkstoff noch weiter, mit dem Ziel, die Schraube schnell und zeitsparend einschrauben zu können.

Um die Schraube derart in den Werkstoff versenken zu können, dass der Schraubenkopf nicht über die Oberfläche des Werkstücks übersteht, weist eine weitere bevorzugte Ausführungsform der erfindungsgemäßen Schraube an der Unterseite des Schraubenkopfs Kopffräsrippen auf. Durch die Kopffräsrippen wird beim Eindrehen der Schraube Material abgetragen, um Raum zu schaffen, in den der Schraubenkopf versenkt werden kann. Dies ermöglicht einen oberflächenbündigen Abschluss des Schraubenkopfs mit dem Werkstück. Zudem wird die Gefahr des Spaltens des Werkstücks beim Versenken des Schraubenkopfs verringert.

Vorteilhafterweise weist der Schaft der erfindungsgemäßen Schraube am Übergang zum Schraubenkopf einen vergrößerten Querschnitt als Verstärkungsquerschnitt auf. Durch den lokal vergrößerten Querschnitt wird in diesem Bereich das Torsionswiderstandsmoment vergrößert und die am Übergang zum Kopf auftretenden Spannungen reduziert. Dies führt zu einem verbesserten Schutz gegen das Abdrehen des Schraubenkopfs, was besonders wichtig bei harten Werkstoffen mit hohem Einschraubwiderstand oder bei Verschraubungen von Metall auf Holz wie z.B. bei Holzverbindern oder Profilen ist. Bei einer Schraube mit Senkkopf kann der Schraubenkopf beispielsweise als Doppelkonus ausgeführt sein, das heißt, dass ein sich konisch nach hinten erweiternder Schraubenkopf am Übergang zum Schaft eine sich ebenfalls nach hinten konisch erweiternde Verstärkung aufweist

Die Erfindung wird nachfolgend anhand eines Ausführungsbeispiels näher erläutert.

Es zeigen:
- Figur 1: eine erfindungsgemäße Schraube in einer Seitenansicht; und
- Figur 2: eine vergrößerte Darstellung des vorderen Teils der erfindungsgemäßen Schraube.

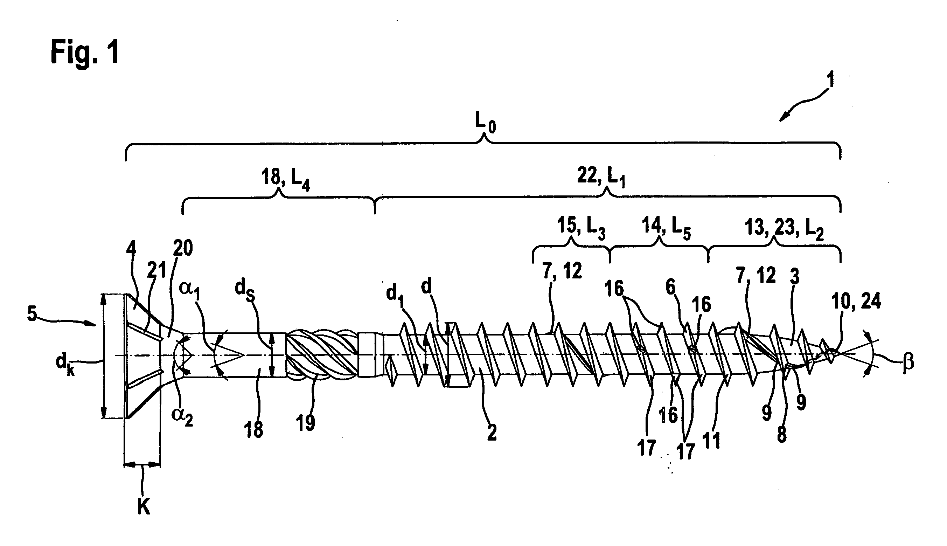

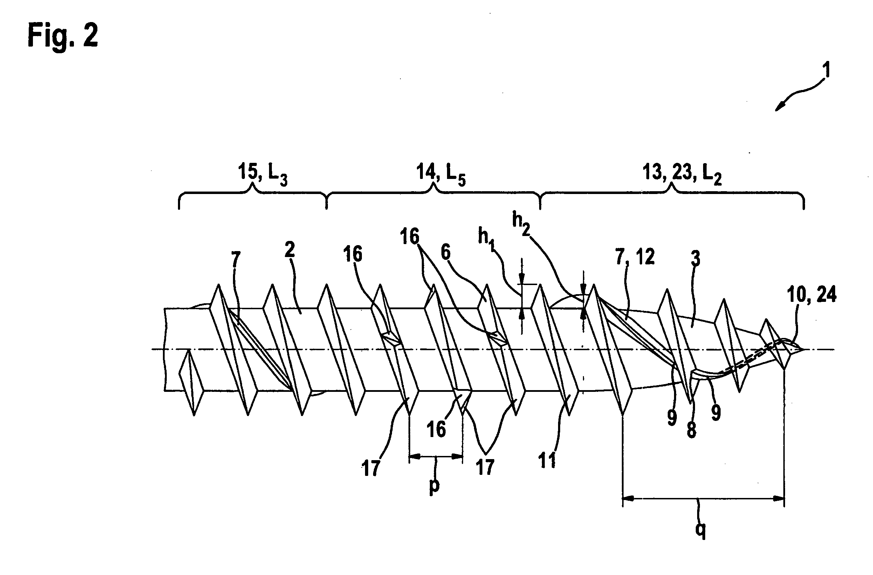

Die Figuren 1 und 2 zeigen eine erfindungsgemäße Schraube 1 mit einem Schaft 2, einer kegelförmigen Spitze 3 und einem Kopf 4 mit einem nicht näher dargestellten Drehmitnahmemittel 5. Die Schraube 1 weist zudem ein Hauptgewinde 6 sowie ein Nebengewinde 7 auf. Zwischen dem Kopf 4 und einer ersten Teillänge 22 des Schafts 2, an den das Hauptgewinde 6 angeordnet ist, befindet sich ein gewindefreier Teil 18 des Schafts 2 mit Schaftfräsrippen 19. Auf Geometrie und Funktion der Schaftfräsrippen 19 wird im Weiteren noch eingegangen. Das Hauptgewinde 6 weist eine kleinere Gewindesteigung als das Nebengewinde 7 auf. Bei der dargestellten Schraube 1 ist die Steigung q des Nebengewindes 7 drei mal so groß wie die Steigung p des Hauptgewindes 6.

Das Hauptgewinde 6 erstreckt sich über die erste Teillänge 22 des Schafts 2. Das Nebengewinde 7 erstreckt sich über eine zweite Teillänge 23 des Schafts 2. Beide Teillängen 22 und 23 erstrecken sich von der Spitze 3 der Schraube 1 entlang des Schafts 2, wobei die erste Teillänge 22 größer ist als die zweite Teillänge 23. Das Hauptgewinde 6 ist im Wesentlichen als ein die Spitze 3 und den Schaft 2 der Schraube 1 umlaufendes Gewinde angeordnet, das durch das Nebengewinde 7 nicht unterbrochen wird. Dagegen wird das Nebengewinde 7 von dem Hauptgewinde 6 unterbrochen. Allerdings ist das Nebengewinde 7 derart geführt, dass es trotz der Unterbrechung durch das Hauptgewinde 6 die Schraube 1 als kontinuierliche Schraubenlinie umschreibt. Das Nebengewinde 7 durchbricht das Hauptgewinde 6 nicht, sondern beginnt an einem Schnittpunkt 8 der beiden Gewinde 6, 7 beidseitig des Hauptgewindes 6 mit zwei korrespondierenden Abschnitten 9. Es entsteht daher der Eindruck, als ob das Nebengewinde 7 das Hauptgewinde 6 tunnelartig kreuzt.

Kennzeichnend für die erfindungsgemäße Schraube 1 ist, dass sich das Hauptgewinde 6 und das Nebengewinde 7 bis zu einem vorderen Ende 10 der Spitze 3 der Schraube 1 erstrecken und dass das Hauptgewinde 6 über einen wesentlichen Teil der Teillänge 22, insbesondere im Bereich des Schafts 2, Gewindeflanken 11 aufweist, die im Wesentlichen höher sind als die Gewindeflanken 12 des Nebengewindes 7 im selben Querschnitt. Beispielsweise weist das Hauptgewinde 6 in Querschnitt A-A Gewindeflanken 11 mit einer Höhe h₁ auf, die größer ist als die Höhe h₂ der Gewindeflanken 12 des Nebengewindes 7. Im Schnitt A-A ist die Höhe h₁ der Gewindeflanke 11 des Hauptgewindes 6 ungefähr doppelt so groß wie die Höhe h₂ der Gewindeflanke 12 des Nebengewindes 7.

Da sich beide Gewinde 6, 7 bis zum vorderen Ende 10 der Spitze 3 der Schraube 1 erstrecken, greifen beide Gewinde 6, 7 schon direkt nach dem Ansetzen der Schraube 1 an ein nicht dargestelltes Werkstück und bei der ersten Umdrehung der Schraube 1. Dies sorgt für ein gutes erstes Einziehen der Schraube 1 in das Werkstück, wobei das Nebengewinde 7 aufgrund der geringen Höhe h₂ seiner Gewindeflanken 12 nicht stört, sondern das Eindringen der Gewindeflanken 11 des Hauptgewindes 6 erleichtert. Das Nebengewinde 7 führt nicht dargestelltes Bohrmehl ab und unterstützt aufgrund seiner größeren Gewindesteigung den Vortrieb des Hauptgewindes 6. Durch die größere Höhe h₁ der Gewindeflanken 11 des Hauptgewindes 6 kann dieses eine gut tragende Gewindefurche bilden und gewährleistet dadurch einen stabilen Vortrieb. Somit ist bereits mit dem Ansetzen der Schraube 1 klar, dass das Hauptgewinde 6 schneidet, trägt und antreibt und das Nebengewinde 7 fräst und Bohrmehl abführt. Dies führt zu einer deutlichen Verbesserung des Montageverhaltens der erfindungsgemäßen Schraube 1 gegenüber den aus dem. Stand der Technik bekannten Schrauben.

Das Ansetzen der erfindungsgemäßen Schraube 1 an ein Werkstück wird zudem dadurch verbessert, dass sowohl das Hauptgewinde 6 als auch das Nebengewinde 7 am vorderen Ende 10 der Spitze 3 der Schraube 1 in einem gemeinsamen Gewindeanfang 24 beginnen. Dies verhindert ein Abrutschen der Schraube 1 von dem nicht dargestellten Werkstück, das auftreten könnte, wenn beispielsweise zunächst das Hauptgewinde 6 und dann erst das Nebengewinde 7 mit dem Werkstück in Kontakt treten würden.

Das Nebengewinde 7 ist im Bereich des Schafts 2 unterbrochen. Es erstreckt sich ausgehend von dem vorderen Ende 10 der Spitze 3 der Schraube 1 in einem ersten Abschnitt 13 über die zweite Teillänge 23 des Schafts 2 und über vier Gewindesteigungen des Hauptgewindes 6. Hierauf folgt ein Zwischenabschnitt 14 der kein Nebengewinde 7 aufweist. Dieser Zwischenabschnitt 14 erstreckt sich über mindestens zwei, bei der dargestellten Schraube über vier Gewindesteigungen des Hauptgewindes 6. An den Zwischenabschnitt 14 schließt sich ein zweiter Abschnitt 15 an, an dem wiederum das Nebengewinde 7 angeordnet ist. Die Länge L₃ des zweiten Abschnitts 15 des Nebengewindes 7 entspricht in diesem Fall drei Gewindesteigungen des Hauptgewindes 6.

Zur Verringerung des Eindrehwiderstands der Schraube 1 weist die erfindungsgemäße Schraube 1 Schneidkerben 16 auf. Die Schneidkerben 16 sind als dreiecksförmige, lokal angeordnete Ausnehmungen an den Gewindeflanken 11 des Hauptgewindes 6 ausgebildet. Die Schneidkerben 16 sind im Bereich des Zwischenabschnitts 14 ohne Nebengewinde 7 an den drei mittleren Gewindesteigungen 17 dieses Abschnitts angeordnet, wobei jede Gewindesteigung 17 drei Schneidkerben 16 aufweist, die gleichmäßig über den Umfang verteilt, also um 120° versetzt, angeordnet sind. Die Schneidkerben 16 von zwei aufeinander folgenden Gewindesteigungen 17 sind zudem, bezogen auf die Längsachse der Schraube 1, um 60° in Umfangrichtung versetzt. Die Schneidkerben 16 haben die Funktion, beim Eindrehen der Schraube 1 etwas Material am Werkstück abzutragen, dadurch den durch das Hauptgewinde 6 geformten Kanal zu weiten und den Eindrehwiderstand der Schraube zu verringern.

Eine ähnliche Funktion erfüllen die zwischen dem Kopf 4 der Schraube 1 und dem Hauptgewinde 6 angeordneten Schaftfräsrippen 19. Über den Umfang verteilt sind sechs Schaftfräsrippen 19 angeordnet, die im Wesentlichen gewindeförmig ausgeführt sind. Alternativ sind andere Ausführungen möglich, beispielsweise gerade oder wellenförmig. Jeweils eine Schaftfräsrippe 19 erstreckt sich über 1/3 einer Gewindesteigung der Schaftfräsrippen 19, also in Umfangsrichtung über 120°, wobei der Abstand zwischen den einzelnen Schaftfräsrippen 19 1/6 des Umfangs der Schraube 1 oder in Winkelkoordinaten ausgedrückt 60° beträgt. Die Schaftfräsrippen 19 haben die Aufgabe, das durch die Schraube 1 erzeugte, nicht dargestellte Bohrloch aufzufräßen und zu weiten, damit der gewindefreie Teil 18 des Schafts 2 in das Bohrloch eindringen kann, ohne dass der Eindrehwiderstand durch Reibung zwischen Werkstück und gewindefreiem Teil 18 des Schafts 2 merklich erhöht wird. Die Schraube 1 kann zudem mit einem Gleitwachs beschichtet sein, beispielsweise mit Gleitmo 615 im Verhältnis 1:3, was den Eindrehwiderstand weiter reduziert.

An den gewindefreien Teil 18 des Schafts 2 schließt sich ein Verstärkungsquerschnitt 20 an, dessen Querschnitt sich zum Kopf 4 der Schraube 1 hin konisch vergrößert. Der Öffnungswinkel α₁ des Konus des Verstärkungsquerschnitts 20 ist mit 45° halb so groß wie der Öffnungswinkel α₂ des ebenfalls konusförmig ausgebildeten Kopfs 4, der 90° beträgt. Durch den Verstärkungsquerschnitt 20 wird bewirkt, dass in diesem Bereich das Torsionswiderstandsmoment erhöht ist und somit ein Abreißen des Kopfs 4 an der Übergangstelle zwischen Schaft 2 und Kopf 4 vermieden wird. Zudem wird der Querschnitt der Schraube 1 in diesem Bereich vergrößert, wodurch eine nicht dargestellte Aufnahme als Drehmitnahmemittel 5 tiefer ausgeführt werden kann, was die Aufnahme eines Werkzeugs verbessert. Bei der dargestellten Schraube 1 mit einem als Senkkopf ausgeführten Kopf 4 ist das Drehmitnahmemittel 5 beispielsweise als Torx- oder Kreuzschlitz-Aufnahme ausgeführt. Selbstverständlich sind grundsätzlich auch andere Drehmitnahmemittel 5 denkbar, wie beispielsweise ein Außensechskant. An der Unterseite des Kopfs 4 sind zudem geradlinig verlaufende Kopffräsrippen 21 angeordnet. Die Kopffräsrippen 21 weiten die durch die Schraube 1 erzeugte Bohrung im Werkstück derart, dass der Kopf 4 der Schraube 1 auch in hartem Material im Werkstück versenkt werden kann.

Jedes einzelne der genannten Merkmale für sich genommen führt zu einer Verbesserung der Anwenderfreundlichkeit und des Montageverhaltens der erfindungsgemäßen Schraube. Die Kombination der genannten Merkmale führt zu der als Ausführungsbeispiel dargestellten, besonders anwenderfreundlichen Schraube 1 mit einem besonders anwenderfreundlichen Montageverhalten.

Die Maße eines für die erfindungsgemäße Schraube typischen Ausführungsbeispiels sind nachfolgend tabellarisch angegeben. Diese Schraube entspricht im Wesentlichen der in den Figuren 1 und 2 dargestellten Schraube 1:

| | |
|---|---|
| Länge L₀ der Schraube 1: | 100,0 mm |
| Außendurchmesser d der Schraube 1: | 6,0 mm |
| Kerndurchmesser d₁ im Bereich der ersten Teillänge 22: | 3,6 mm |
| Kerndurchmesser d_{S} im gewindefreien Teils 18 des Schafts 2: | 4,2 mm |
| Außendurchmesser d_{K} des Kopfs 4: | 11,4 mm |
| Länge L₁ der ersten Teillänge 22: | 60,0 mm |
| Länge L₂ der zweiten Teillänge 23: | 12,0 mm |
| Länge L₃ des zweiten Abschnitts des Nebengewindes 7: | 9,0 mm |
| Länge L₄ des gewindefreien Teils 18 des Schafts 2: | 6,3 mm |
| Länge L₅ des Zwischenabschnitts 14 ohne Nebengewinde 7: | 12,0 mm |
| Steigung p des Hauptgewindes 6: | 3,0 mm |
| Steigung q des Nebengewindes 7: | 9,0 mm |
| Höhe h₁ der Gewindeflanke des Hauptgewindes 6: | 1,2 mm |
| Höhe h₂ der Gewindeflanke des Nebengewindes 7: | 0,5 mm |
| Höhe k des Kopfs 4: | 3,4 mm |
| Öffnungswinkel α₁ des Konus des Kopfs 4: | 45° |
| Öffnungswinkel α₂ des Konus des Verstärkungsquerschnitts 20: | 90° |
| Öffnungswinkel β der Spitze 3: | 30° |

## Patentansprüche

1. Schraube (1) mit einem Schaft (2), einer Spitze (3), einem Kopf (4) mit einem Drehmitnahmemittel (5), sowie mit einem Hauptgewinde (6) und einem Nebengewinde (7),
- wobei das Hauptgewinde (6) eine kleinere Gewindesteigung als das Nebengewinde (7) aufweist,
- wobei sich das Hauptgewinde (6) mindestens über eine erste Teillänge (22) des Schafts (2) erstreckt, und
- wobei sich das Nebengewinde (7) mindestens über eine zweite Teillänge (23) des Schafts (2) erstreckt,
**dadurch gekennzeichnet,**
- **dass** sich das Hauptgewinde (6) und das Nebengewinde (7) bis zu einem vorderen Ende (10) der Spitze (3) der Schraube (1) erstrecken und am vorderen Ende (10) in einem gemeinsamen Gewindeanfang (24) beginnen, und
- **dass** das Hauptgewinde (6) über einen wesentlichen Teil seiner Länge, insbesondere im Bereich des Schafts (2), Gewindeflanken (11) aufweist, die höher sind als die Gewindeflanken (12) des Nebengewindes (7).

2. Schraube nach Anspruch 1, **dadurch gekennzeichnet, dass** das Hauptgewinde (6) und das Nebengewinde (7) die gleiche Orientierung aufweisen.

3. Schraube nach Anspruch 1 oder 2, **dadurch gekennzeichnet, dass** das Nebengewinde (7) eine 2 bis 4, insbesondere eine 3 mal so große Steigung aufweist wie das Hauptgewinde (6).

4. Schraube nach einem der Ansprüche 1 bis 3, **dadurch gekennzeichnet, dass** die Gewindeflanken (11) des Hauptgewindes (6) im Wesentlichen 1,5 bis 4,0 mal, insbesondere 1,8 bis 3,5 mal so hoch sind wie die des Nebengewindes (7).

5. Schraube nach einem der Ansprüche 1 bis 4, **dadurch gekennzeichnet, dass** das Nebengewinde (7) in einem Bereich des Schafts (2) unterbrochen ist.

6. Schraube nach Anspruch 5, **dadurch gekennzeichnet, dass** ein erster Abschnitt (13) des Nebengewindes (7) von einem zweiten Abschnitt (15) des Nebengewindes (7) einen Abstand von mindestens 2, insbesondere von im Wesentlichen 4 Gewindegängen des Hauptgewindes (6) aufweist.

7. Schraube nach einem der Ansprüche 1 bis 6, **dadurch gekennzeichnet, dass** der erste Abschnitt (13) des Nebengewindes (7) sich von der Spitze über 2 bis 6, insbesondere über 4 Gewindegänge des Hauptgewindes (6) erstreckt.

8. Schraube nach einem der Ansprüche 1 bis 7, **dadurch gekennzeichnet, dass** das Hauptgewinde (6) Schneidkerben (16) aufweist.

9. Schraube nach einem der Ansprüche 1 bis 8, **dadurch gekennzeichnet, dass** am Schaft (2) Schaftfräsrippen (19) angeordnet sind.

10. Schraube nach einem der Ansprüche 1 bis 9, **dadurch gekennzeichnet, dass** die Schraube (1) zumindest teilweise mit Gleitwachs beschichtet ist.

11. Schraube nach einem der Ansprüche 1 bis 10, **dadurch gekennzeichnet, dass** am Schraubenkopf (4) Kopffräsrippen (21) angeordnet sind.

12. Schraube nach einem der Ansprüche 1 bis 11, **dadurch gekennzeichnet, dass** der Schaft (2) am Übergang zum Schraubenkopf (4) einen vergrößerten Querschnitt als Verstärkungsquerschnitt (20) aufweist.

## Claims

1. Screw (1) having a shank (2), a tip (3), a head (4) with an engagement means (5) for rotation, and also a main thread (6) and an auxiliary thread (7),
- the main thread (6) having a smaller thread pitch than the auxiliary thread (7),
- the main thread (6) extending at least over a first part-length (22) of the shank (2), and
- the auxiliary thread (7) extending at least over a second part-length (23) of the shank (2),
**characterised in that**
- the main thread (6) and the auxiliary thread (7) extend as far as the front end (10) of the tip (3) of the screw (1) and begin at a common thread start (24) at the front end (10), and
- **in that** the main thread (6) has, over a substantial part of its length, especially in the shank (2) region, thread flanks (11) which are higher than the thread flanks (12) of the auxiliary thread (7).

2. Screw according to claim 1, **characterised in that** the main thread (6) and the auxiliary thread (7) have the same orientation.

3. Screw according to claim 1 or 2, **characterised in that** the auxiliary thread (7) has a pitch 2 to 4, especially 3, times larger than the main thread (6).

4. Screw according to one of claims 1 to 3, **characterised in that** the thread flanks (11) of the main thread (6) substantially are 1.5 to 4.0 times, especially 1.8 to 3.5 times, higher than those of the auxiliary thread (7).

5. Screw according to one of claims 1 to 4, **characterised in that** the auxiliary thread (7) is interrupted in a region of the shank (2).

6. Screw according to claim 5, **characterised in that** a first portion (13) of the auxiliary thread (7) is spaced apart from a second portion (15) of the auxiliary thread (7) by at least 2, especially by substantially 4, turns of the main thread (6).

7. Screw according to one of claims 1 to 6, **characterised in that** the first portion (13) of the auxiliary thread (7) extends from the tip over 2 to 6, especially over 4, turns of the main thread (6).

8. Screw according to one of claims 1 to 7, **characterised in that** the main thread (6) has cutting notches (16).

9. Screw according to one of claims 1 to 8, **characterised in that** material-removing shank ribs (19) are arranged on the shank (2).

10. Screw according to one of claims 1 to 9, **characterised in that** the screw (1) is at least partially coated with anti-friction wax.

11. Screw according to one of claims 1 to 10, **characterised in that** material-removing head ribs (21) are arranged on the screw head (4).

12. Screw according to one of claims 1 to 11, **characterised in that** the shank (2) has, at the transition to the screw head (4), an enlarged cross-section as a reinforcing cross-section (20).

## Revendications

1. Vis (1) comprenant une tige (2), une pointe (3), une tête (4) munie d'un moyen (5) d'entraînement en rotation, ainsi qu'un filetage principal (6) et un filetage auxiliaire (7),
- le filetage principal (6) présentant un pas de filet moins accentué que celui du filetage auxiliaire (7),
- ledit filetage principal (6) s'étendant au moins sur une première longueur partielle (22) de la tige (2), et
- ledit filetage auxiliaire (7) s'étendant au moins sur une seconde longueur partielle (23) de ladite tige (2),
**caractérisée par le fait**
- **que** le filetage principal (6) et le filetage auxiliaire (7) s'étendent jusqu'à une extrémité antérieure (10) de la pointe (3) de la vis (1), et débutent par une amorce de filetage commune (24) à ladite extrémité antérieure (10) ; et
- et **que** ledit filetage principal (6) comporte sur une partie essentielle de sa longueur, notamment dans la région de la tige (2), des flancs (11) plus hauts que les flancs (12) dudit filetage auxiliaire (7).

2. Vis selon la revendication 1, **caractérisée par le fait que** le filetage principal (6) et le filetage auxiliaire (7) présentent la même orientation.

3. Vis selon la revendication 1 ou 2, **caractérisée par le fait que** le filetage auxiliaire (7) offre un pas représentant de 2 à 4 fois, en particulier 3 fois celui du filetage principal (6).

4. Vis selon l'une des revendications 1 à 3, **caractérisée par le fait que** les flancs (11) du filetage principal (6) offrent une hauteur représentant, pour l'essentiel, de 1,5 à 4,0 fois, en particulier de 1,8 à 3,5 fois celle des flancs du filetage auxiliaire (7).

5. Vis selon l'une des revendications 1 à 4, **caractérisée par le fait que** le filetage auxiliaire (7) est discontinu dans une région de la tige (2).

6. Vis selon la revendication 5, **caractérisée par le fait qu'**un premier tronçon (13) du filetage auxiliaire (7) se trouve, vis-à-vis d'un second tronçon (15) dudit filetage auxiliaire (7), à une distance représentant au moins 2 et en particulier, pour l'essentiel, 4 spires du filet du filetage principal (6).

7. Vis selon l'une des revendications 1 à 6, **caractérisée par le fait que** le premier tronçon (13) du filetage auxiliaire (7) s'étend, à partir de la pointe, sur une distance représentant de 2 à 6 et, en particulier 4 spires du filet du filetage principal (6).

8. Vis selon l'une des revendications 1 à 7, **caractérisée par le fait que** le filetage principal (6) est pourvu d'encoches de sectionnement (16).

9. Vis selon l'une des revendications 1 à 8, **caractérisée par le fait que** des nervures de fraisage (19) sont façonnées sur la tige (2).

10. Vis selon l'une des revendications 1 à 9, **caractérisée par le fait que** ladite vis (1) est revêtue, au moins en partie, de cire de glissement.

11. Vis selon l'une des revendications 1 à 10, **caractérisée par le fait que** des nervures de fraisage (21) sont façonnées sur la tête (4) de ladite vis.

12. Vis selon l'une des revendications 1 à 11, **caractérisée par le fait que** la tige (2) comporte, à la transition avec la tête (4) de ladite vis, une section transversale accrue matérialisant une section transversale de renforcement (20).
